Europäisches Patentamt

European Patent Office

Office européen des brevets

(19)

(11)  EP 1 523 085 A2

(12)  **EUROPÄISCHE PATENTANMELDUNG**

(43) Veröffentlichungstag:
13.04.2005  Patentblatt 2005/15

(51) Int Cl.⁷: **H02K 5/18**

(21) Anmeldenummer: 04450187.2

(22) Anmeldetag: 06.10.2004

(84) Benannte Vertragsstaaten:
**AT BE BG CH CY CZ DE DK EE ES FI FR GB GR HU IE IT LI LU MC NL PL PT RO SE SI SK TR**
Benannte Erstreckungsstaaten:
**AL HR LT LV MK**

(30) Priorität: **06.10.2003  AT 15762003**

(71) Anmelder: **Traktionssysteme Austria GmbH 2351 Wiener Neudorf (AT)**

(72) Erfinder:
• **Schulz, Rudolf, Ing.**
  **3511 Furth (AT)**
• **Leser, Stefan**
  **7311 Neckenmarkt (AT)**

(74) Vertreter: **Heger, Georg, Dipl.-Ing., Dr. Sonn & Partner Patentanwälte, Riemergasse 14 1010 Wien (AT)**

(54)    **Gekapselte, elektrische Maschine und Verfahren zur Auslegung einer solchen Maschine**

(57)    Die Erfindung betrifft eine gekapselte, elektrische Maschine (1), vorzugsweise senkrecht eingebaute Asynchron-Traktionsmaschine, und einem Gehäuse (10), einem im Gehäuse (10) angeordneten Stator (4) und einer rotierenden Welle (5) mit einem darauf befestigen Rotor (6), wobei die Maschine gegebenenfalls für einen Zusammenbau mit einem Getriebe (2) vorgesehen ist, wobei die Lagerung getriebeseitig erfolgt. Zur Schaffung einer optimal gekühlten elektrischen Maschine (1), welche konstruktiv den gegeben Platzverhältnissen im anzutreibenden Fahrzeug angepasst werden kann ist vorgesehen, dass die Abführung der Verlustwärme durch natürliche Konvektion bzw. Strahlung und gegebenenfalls durch eine vom Fahrtwind erzeugte Konvektion erfolgt, wobei das Gehäuse (10) aus Leichtmetall, vorzugsweise Aluminium hergestellt ist und das Gehäuse (10) außen diagonal gegenüberliegende Kühlrippen (3) aufweist. Die Kühlrippen (3) sind vorzugsweise überlang ausgebildet, d.h. weisen eine Länge auf welche ein Vielfaches der Dicke der Kühlrippen (3) und der Abstände der Kühlrippen (3) zueinander beträgt.

Fig. 1

EP 1 523 085 A2

**Beschreibung**

Die Erfindung betrifft eine gekapselte, elektrische Maschine, vorzugsweise senkrecht eingebaute Asynchron-Traktionsmaschine, mit einem Gehäuse, einem im Gehäuse angeordneten Stator und einer rotierenden Welle mit einem darauf befestigten Rotor, wobei die Maschine gegebenenfalls für einen Zusammenbau mit einem Getriebe vorgesehen ist, wobei die Lagerung getriebeseitig erfolgt.

Elektromotoren für den Antrieb von Fahrzeugen müssen so nah wie möglich an der angetriebenen Achse sein, um komplizierte und teure Kraftübertragungen zu umgehen. Insbesondere bei den tonnenschweren Schienenfahrzeugen können die elektrischen Antriebsmotoren nur direkt im Drehgestell angeordnet werden. Bei jeder Kurve und sogar beim Geradeausfahren gibt es große Relativbewegungen zwischen Drehgestell und Wagenkasten, den die Kraftübertragung bei einer Anordnung des Antriebsmotors außerhalb des Drehgestelles ständig ausgleichen müsste.

Das Drehgestell ist aber unmittelbar über den Schienen bzw. über dem Boden. Bei den üblichen durchzugsbelüfteten Motoren können daher durch den Fahrtwind sehr leicht Fremdkörper, wie Steinchen, Staub oder bei Regen Wasser mit der Kühlluft in den Motor gelangen und ihn beschädigen, so dass er nach kurzer Betriebszeit vorzeitig ausfällt. Daher kommen bei Schienenfahrzeugen fast ausschließlich geschlossene bzw. gekapselte Motoren zum Einsatz.

Diese bekannten Motoren haben aber den enormen Nachteil, dass die entstehende Verlustwärme viel schlechter abgegeben werden kann. Die tonnenschweren Schienenfahrzeuge brauchen entsprechende Antriebsleistungen, um vernünftige Beschleunigungen nach dem Halt in den Stationen zusammenzubringen. Die Antriebsleistung des Elektromotors ist abhängig von der Stromstärke, die durch die Kupferwicklungen fließt und die benötigten Magnetfelder erzeugt. Im Prinzip gilt: je höher die Stromstärke umso größer die Antriebsleistung. Leider begrenzen die Naturgesetze die beliebige Erhöhung der Stromstärke zur Vergrößerung der Antriebsleistung. Der Strom kann in den Kupferwicklungen nicht widerstandslos fließen. Die Ohmschen Gesetze bestimmen die Höhe dieser Verluste und damit die Menge der Verlustwärme in Abhängigkeit von der Stromstärke und dem Leiterquerschnitt.

Kann die entstehende Verlustwärme wegen der schlechteren Kühlung nicht abgeführt werden, steigt die Betriebstemperatur des Motors über die zulässigen Werte an. Da das den Motor sofort zerstören würde, müssen dickere Stromleiter vorgesehen werden, damit weniger Verlustwärme entsteht. Dadurch muss der Motor bei gleicher Antriebsleistung um einiges größer dimensioniert werden und damit ist er schwerer und teurer.

Im Drehgestell sind aber auch die Federung und die Bremsen untergebracht, so dass kaum ausreichend Platz für die Antriebsmotoren vorhanden ist. Je größer die Antriebsmotoren sind, umso schwieriger wird es, sie unterzubringen. Deshalb versucht man die Motoren so klein als möglich zu halten und geht soweit, auch höhere Betriebstemperaturen zu akzeptieren.

Es sind auch Motoren bekannt, beispielsweise aus der DE 197 16 758 C2, bei denen versucht wird, die Wärmeabgabe mit zwei getrennten Kühlkreisläufen zu verbessern. Diese Variante hat allerdings den Nachteil, dass die Bewegung der Kühlluft relativ viel Energie erfordert. Damit die in Rohren strömende Kühlluft entsprechende Wärmemengen aufnehmen und abtransportieren kann, sind relativ hohe Luftgeschwindigkeiten erforderlich. Diese werden von geeigneten Gebläsen mit hohen Leistungen erzeugt. Dadurch wird aber der Wirkungsgrad des Antriebsmotors um einige Prozentpunkte verkleinert.

Es sind aber auch Einzelrad-Antriebsmotoren für die Traktion bekannt, die als wassergekühlte Maschinen ausgeführt sind. Nachteilig bei diesen Maschinen ist die aufwendige Fertigung. Darüber hinaus ist durch die Verwendung von Wasser als Kühlmedium, das von außen zugeführt werden muss, eine hohe Störanfälligkeit gegeben.

Aufgabe der Erfindung ist es daher, eine Maschine der eingangs genannten Art zu schaffen, die einerseits die obigen Nachteile vermeidet und die andererseits konstruktiv den gegebenen Platzverhältnissen im anzutreibenden Fahrzeug angepasst werden kann.

Eine weitere Aufgabe der vorliegenden Erfindung besteht in der Schaffung eines Verfahrens zur Auslegung einer oben genannten elektrischen Maschine, durch welches die realen Bedingungen im Betrieb der elektrischen Maschine berücksichtigt werden und somit die Maschine optimal auf den jeweiligen Einsatz abgestimmt werden kann.

Die erste erfindungsgemäße elektrische Maschine ist dadurch gekennzeichnet, dass die Abführung der Verlustwärme durch natürliche Konvektion bzw. Strahlung und gegebenenfalls durch eine vom Fahrtwind erzeugte Konvektion erfolgt, wobei das Gehäuse aus Leichtmetall, vorzugsweise Aluminium, hergestellt ist und das Gehäuse außen, diagonal gegenüberliegende, Kühlrippen aufweist. Mit der Erfindung ist es erstmals möglich, eine elektrische Maschine, insbesondere eine gekapselte Traktionsmaschine, zu schaffen, die den engen Platzverhältnissen, beispielsweise in einem Portal einer Straßenbahn, durch ihre Konstruktion optimal angepasst werden kann. Erfindungsgemäß werden die Kühlrippen so angeordnet, dass der vorhandene Platz optimal genutzt wird. Die für die Kühlung notwendige Oberfläche der anzuordnenden Kühlrippen wird über ein, später noch beschriebenes, Rechen- bzw. Datenverarbeitungsprogramm berechnet. Die zur Kühlung errechnete und benötigte Oberfläche kann dann auf die Anzahl und Abmessungen der Kühlrippen übergeführt werden. Die Kühlrippen können dann konstruktiv so angeordnet werden, dass einerseits die errechnete Oberfläche erreicht wird und anderseits den Einbauverhältnissen Rechnung getragen wird.

Ein weiterer Vorteil dieser gekapselten Maschine ist darin zu sehen, dass sie unabhängig von der Güte bzw. Qualität der Umgebungsluft ist. Sowohl stark verschmutzte Straßenluft, aber auch Steinchen oder Spritzwasser dringen nicht in das Maschineninnere ein. Ferner weist die erfindungsgemäße Maschine den Vorteil auf, dass durch die Verwendung von Leichtmetall, insbesondere Aluminium, eine Gewichtseinsparung von über 30% gegenüber herkömmlichen Stahlgussausführungen erreicht wird. Die Verwendung von beispielsweise Aluminium hat auch den Vorteil zur Folge, dass weniger Inspektion und Wartung am Motor anfällt, da Aluminium nicht rostet.

Die Kühlrippen sind vorzugsweise überlang hergestellt, d.h. weisen eine Länge auf, welche ein Vielfaches der Dicke der Kühlrippen und der Abstände der Kühlrippen zueinander beträgt.

Einen wirklich überraschenden Vorteil bringen die überlangen Kühlrippen, da sie einerseits trotz Kapselung der Maschine die Oberfläche für die notwendige Kühlung schaffen und anderseits die Außenabmessungen der Maschine nicht überproportional vergrößern. Dies ist wiederum auf die Verwendung von Aluminium zurück zu führen, da Aluminium eine um den Faktor 10 bessere Wärmeleitfähigkeit als Stahlguss aufweist. Durch diese exzellente Wärmeleitfähigkeit werden die überlangen Kühlrippen wärmetechnisch erst richtig wirksam.

Nach einem weiteren Merkmal der Erfindung sind bei eingebauter Maschine die Kühlrippen senkrecht, d.h. achsparallel, angeordnet. Da derartige Traktionsmaschinen vorwiegend für einen Einzelradantrieb herangezogen werden, deren Einbau mit senkrechter Welle erfolgt, wird durch diese Art der Konstruktion der Kühlrippen eine sehr große Oberfläche für die Wärmeabfuhr durch Konvektion geschaffen.

Gemäß einem besonderen Merkmal der Erfindung verlaufen die auf einer Seite der Maschine angeordneten Kühlrippen parallel zueinander. Durch diese Ausführung der Kühlrippen wird eine maximale Kühloberfläche bei geringstem Raumbedarf erreicht.

Nach einer besonderen Ausgestaltung der Erfindung fluchten die diagonal gegenüberliegenden Kühlrippen miteinander. Dadurch werden die vorgegebenen Einbauverhältnisse in einem Antriebsportal optimal ausgenützt.

Gemäß einer Ausgestaltung der Erfindung erfolgt die Anordnung und/oder Formgebung der Kühlrippen entsprechend den Einbau- und/oder Platzverhältnissen. Wie bereits oben ausgeführt, sind die Einbauverhältnisse meist vorgegeben. Mit dieser vorteilhaften Ausgestaltung kann diesen Vorgaben Rechnung getragen werden.

Nach einem besonderen Merkmal der Erfindung ist mindestens ein Teil der Kühlrippen, insbesondere einer Seite der Maschine, im Bereich ihrer freien Enden über einen Mantel bzw. Stege verbunden. Ein derartiger Mantel bringt einerseits den überraschenden Vorteil, dass die Lärmabstrahlung drastisch reduziert wird und anderseits wird die aktive Kühlungsoberfläche noch weiter erhöht.

Gemäß einer Weiterbildung der Erfindung sind bei senkrechter, eingebauter Maschine im Bereich knapp über dem oberen Lagerschild bzw. den Kühlrippen Luftleitbleche od. dgl. vorgesehen. Durch eine intelligente Anordnung von Leitblechen o. dgl. kann eine Saugströmung über der Maschine erreicht werden, wodurch die Wärmeabfuhr noch erhöht werden kann.

Nach einem weiteren besonderen Merkmal der Erfindung ist zur Berechnung und Auslegung der elektrischen Maschine, insbesondere zur Dimensionierung der Kühlrippen, ein Datenverarbeitungsprogramm vorgesehen, das zur Ermittlung von Zustandsgrößen, insbesondere der Temperaturen und Wärmeströme, für den stationären Endzustand und/oder für den dynamischen Fahrbetrieb, in der elektrischen Maschine dient, wobei dieses Daienverarbeitungsprogramm die Berechnungen über ein Wärmequellennetzwerk durchführt. Mit einem derartigen Datenverarbeitungsprogramm kann gezielt auf Kundenwünsche bzw. auf die Platzverhältnisse für den Einbau eingegangen werden und eine wirtschaftliche Lösung erarbeitet werden.

Die zweite erfindungsgemäße Aufgabe wird durch ein Verfahren zur Auslegung einer oben erwähnten elektrischen Maschine gelöst, wobei mit Hilfe eines Datenverarbeitungsprogramms entsprechend der geometrischen Definition der Maschine, wie Abmessungen, Nutenform, Wicklungsart und Materialeigenschaften ein Wärmequellennetz erstellt wird, Knotenpunkte für das Wärmequellennetz festgelegt und zwischen den Knotenpunkten die thermischen Übergangswiderstände definiert werden und in den Knotenpunkten die Temperaturen für den stationären Endzustand der Maschine errechnet werden, wobei die Temperaturen in den Knotenpunkten für den dynamischen Zustand der Maschine errechnet werden, indem in die Berechnung die Verluste für die einzelnen Knotenpunkte und/oder der thermischen Übergangswiderstände zwischen den einzelnen Knotenpunkten das dynamische Verhalten der Maschine im Betrieb, insbesondere das Fahrspiel, berücksichtigt wird, wobei die thermischen Übergangswiderstände zwischen den einzelnen Knotenpunkten durch die thermischen Kapazitäten der entsprechenden Regionen der Maschine ergänzt werden.

Mit diesem Verfahren ist es erstmals möglich eine elektrische Maschine zu berechnen und zu konstruieren, deren Auslegung nahe der Belastungsgrenze liegt. Dadurch kann eine sehr kompakte Bauweise, die eben insbesondere bei Traktionsmaschinen gefordert wird, erreicht werden.

Erreicht wird die Berücksichtigung des dynamischen Verhaltens der Maschine durch die Aufnahme der thermischen Kapazitäten in die thermischen Übergangswiderstände. Es handelt sich bei den Übergangswiderständen des Wärmequellennetzes nunmehr nicht um reale sondern komplexe Übergangswiderstände. Dadurch kann die zeitliche Abhängigkeit der Maschinenparameter, welche während des Fahrspiels auftritt, berücksichtigt werden. In der Praxis werden für das jeweilige Fahrspiel die Drehzahlgeschwindigkeit und elektrischen Verluste wie Eisenverluste, Kupferverluste im Stator und Rotor in Abhängigkeit der Zeit berechnet und in die thermische Berechnung anhand des Wärmequellennetzes einbezogen. Dabei werden mit entsprechenden mathematischen Programmen die resultierenden Differenzialgleichungen gelöst und in den jeweiligen Knotenpunkten des Wärmequellennetzes die zeitlichen Verläufe der Temperaturen ermittelt. Zur Auslegung der elektrischen Maschine wird das jeweilige Fahrspiel, welches das dynamische Verhalten der elektrischen Maschine definiert so oft wiederholt bis sich ein Gleichgewicht, die sogenannte Beharrung einstellt. Diese Temperaturwerte im Zustand des Gleichgewichts bzw. während der Beharrung werden nunmehr als Grenzwert der Temperatur für die Auslegung der elektrischen Maschine herangezogen. Sind die in den jeweiligen Knotenpunkten auftretenden maximalen Temperaturen unter den Grenzwerten, kann die Maschine beispielsweise kleiner ausgeführt werden. Liegt die Temperatur über den zulässigen Grenzwerten, muss die Maschine größer ausgeführt werden.

Gemäß einem speziellen Merkmal der Erfindung wird mindestens jeweils ein Knotenpunkt für die Zähne im Stator und im Rotor, für die Nuten jeweils im Stator und im Rotor, für den Luftspalt, für das Statorjoch, für das Rotorjoch, für jede Seite des Wickelkopfes und für den Kurzschlussring auf jeder Seite festgelegt. Bei einer derartigen Berechnung müssen die Verluste, wie Stator-, Rotor-, Eisen- und Zusatzverluste sowie auch die mechanischen Verluste, berücksichtigt werden.

Nach einer weiteren Ausgestaltung der Erfindung wird im Statorjoch und den angrenzenden Konstruktionsteilen, wie beispielsweise dem Gehäuse mit den Kühlrippen, mindestens ein weiterer Knotenpunkt festgelegt und der zwischen den Knotenpunkten auftretende Übergangswiderstand berechnet. Mit einer derartigen Festlegung der Knotenpunkte kann eine gute Näherung an die tatsächlichen Maschinendaten im Betrieb erreicht werden. Man kann sich also den Grenzwerten der Maschine nähern.

Gemäß einer Weiterbildung der Erfindung wird im Rotorjoch und den angrenzenden Konstruktionsteilen, wie beispielsweise der Welle, mindestens ein weiterer Knotenpunkt festgelegt und der zwischen den Knotenpunkten auftretende Übergangswiderstand berechnet. Auch ein derartiger Knotenpunkt führt an die Grenzwerte der Maschine heran. Eine bewusste Annäherung an die Grenzwerte einer Maschine führt meist zu einer optimalen, also kleineren, Bauweise.

Gemäß einem besonderen Merkmal der Erfindung wird bei der Berechnung der Verluste für die einzelnen Knotenpunkte und/oder der thermischen Übergangswiderstände zwischen den einzelnen Knotenpunkten die Temperaturabhängigkeit der Materialien mittels eines Temperaturfaktors berücksichtigt. Dadurch werden bei der Berechnung der Maschine die Materialeigenschaften der einzelnen Komponenten berücksichtigt.

Nach einer weiteren erfindungsspezifischen Ausgestaltung werden aus den errechneten Werten der Temperaturen für den dynamischen Zustand der Maschine insbesondere während des Fahrspiels Mittelwerte berechnet. Insbesondere die Traktionsmaschine wird Belastungen durch den Stopp/Go-Betrieb, also Wechselbelastungen, ausgesetzt. Um diese Wechselbelastungen für die Berechnung in vernünftige Werte fassen zu können werden Simulationen durchgeführt und daraus Mittelwerte genommen. So werden beispielsweise aus dem tatsächlichen Fahrspiel im Zuge der dynamischen Berechnung die Temperaturverläufe gerechnet.

Gemäß einem ganz besonderen Merkmal der Erfindung werden bei der Berechnung der thermischen Übergangswiderstände zwischen den Knotenpunkten Korrekturfaktoren eingeführt, die vorzugsweise aus Erfahrungswerten gebildet werden. Wie sich in der Praxis gezeigt hat, ist es für die Berechnung sehr vorteilhaft, wenn empirische Werte, wie Erfahrungswerte als Korrekturfaktoren eingesetzt werden.

Die Erfindung wird an Hand von Ausführungsbeispielen, die in den Zeichnungen dargestellt sind, näher erläutert. Darin zeigen:

Fig. 1　zeigt eine Motor-Getriebe-Einheit in dreidimensionaler Darstellung;

Fig. 2　einen prinzipiellen Aufbau einer Asynchron-Traktionsmaschine als Motor-Getriebe-Einheit im Querschnitt;

Fig. 3　ein Motorgehäuse in dreidimensionaler Darstellung;

Fig. 4　eine Draufsicht auf die senkrecht eingebaute Einheit und

Fig. 5　eine Struktur eines Wärmequellennetzwerkes für eine gekapselte, elektrische Maschine als Prinzipschaltbild.

Einführend sei festgehalten, dass in der beschriebenen Ausführungsform gleiche Teile bzw. Zustände mit gleichen Bezugszeichen bzw. gleichen Bauteilbezeichnungen versehen werden, wobei die in der gesamten Beschreibung enthaltenen Offenbarungen sinngemäß auf gleiche Teile bzw. Zustände mit gleichen Bezugszeichen bzw. gleichen Bauteilbezeichnungen übertragen werden können.

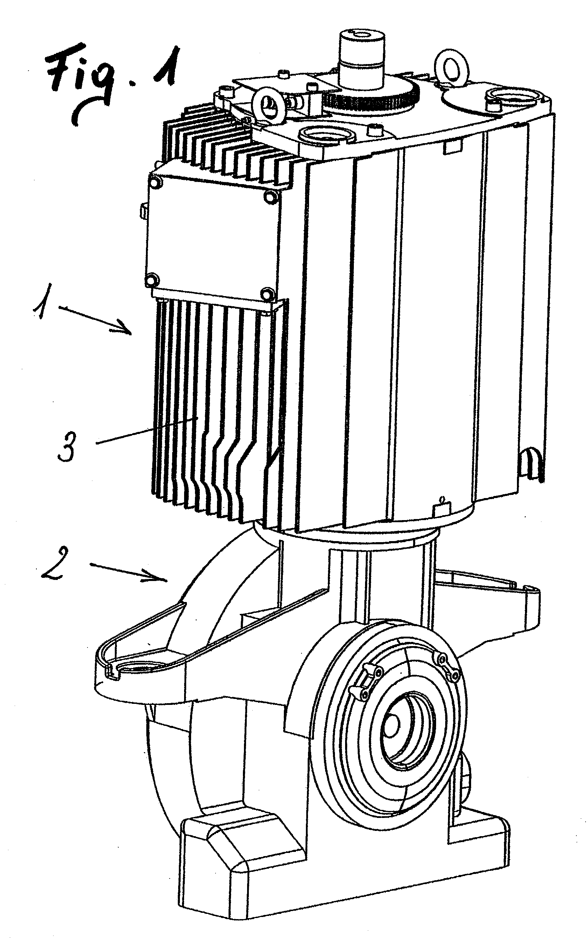

Gemäß der Fig. 1 ist eine gekapselte, elektrische Maschine 1 mit angebautem Getriebe 2 als Motor-Getriebe-Einheit im Querschnitt dargestellt, wobei diese Einheit für den Traktionsbetrieb konstruiert ist. Insbesondere beim Traktionsbetrieb werden derartige Einheiten, beispielsweise bei Straßenbahnen als Einzelradantrieb, eingesetzt. Derartige Einzelradantriebe sind in den Portalen der Drehgestelle vorgesehen. Die Maschine 1 weist keine aktive Belüftung oder zusätzliche Kühlmedien auf.

Die Abführung der Verlustwärme erfolgt durch natürliche Konvektion bzw. Strahlung und gegebenenfalls durch eine vom Fahrtwind erzeugte Konvektion, wobei das Maschinengehäuse aus Leichtmetall, vorzugsweise Aluminium, hergestellt ist und außen, diagonal gegenüberliegende, überlange Kühlrippen 3 aufweist, auf die später noch näher eingegangen wird.

Die für die Kühlung notwendige Oberfläche der anzuordnenden Kühlrippen 3 wird über ein, später noch beschriebenes, Rechen- bzw. Datenverarbeitungsprogramm berechnet. Die zur Kühlung errechnete und benötigte Oberfläche kann dann auf die Anzahl und Abmessungen der Kühlrippen 3 übergeführt werden. Die überlangen Kühlrippen 3 können dann konstruktiv so angeordnet werden, dass einerseits die errechnete Oberfläche erreicht wird und anderseits den Einbauverhältnissen Rechnung getragen wird.

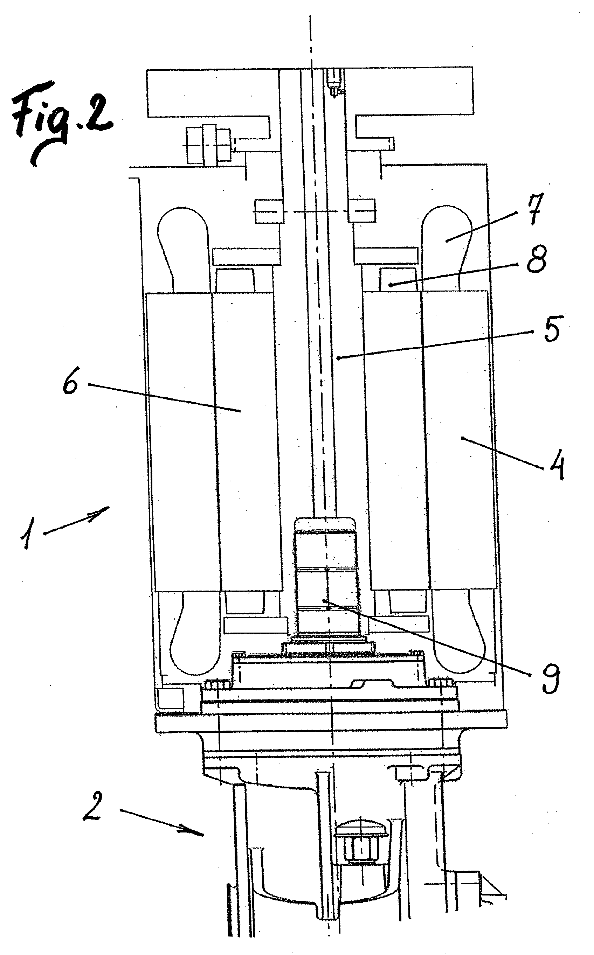

Der Aufbau der Motor-Getriebe-Einheit wird an Hand der Fig. 2 näher erläutert. Die Maschine 1 besteht aus einem Stator 4 und einem, auf einer rotierenden Welle 5 befestigten, Rotor 6. Sowohl der Stator 4, wie auch der Rotor 6 sind aus einzelnen, zu Blechpaketen zusammengefügten, Blechen aufgebaut. Der Stator 4 besteht aus gestanzten Statorblechen, die zum Statorblechpaket geschichtet werden. Weiters ist im Stator 4 die Statorwicklung mit den seitlich herausragenden Wickelköpfen 7 angeordnet. Der Rotor 6 besteht ebenfalls aus gestanzten Rotorblechen die zum Rotorblechpaket geschichtet werden und weist die Rotorwicklung mit den Kurzschlussringen 8 auf.

Antriebsseitig ist die Welle 5 der Maschine 1 derart ausgeführt, dass der Wellenstummel 9 des Getriebes 2 mit der Welle 5 verbunden werden kann. Dies kann über eine form- und/oder kraftschlüssige Verbindung erfolgen. Die antriebsseitige Lagerung der Maschine 1 erfolgt über das Getriebe 2, das an das Maschinengehäuse angeflanscht ist.

Wie weiter oben beschrieben, muss die in der gekapselten Maschine 1 entstehende Verlustwärme über die Oberfläche des Maschinengehäuses abgeführt werden. Dies erfolgt durch natürliche Konvektion bzw. Strahlung und gegebenenfalls durch eine vom Fahrtwind erzeugte Konvektion, was auf Grund der Höhe dieser anfallenden Verlustwärrrie eine große Oberfläche bedingt.

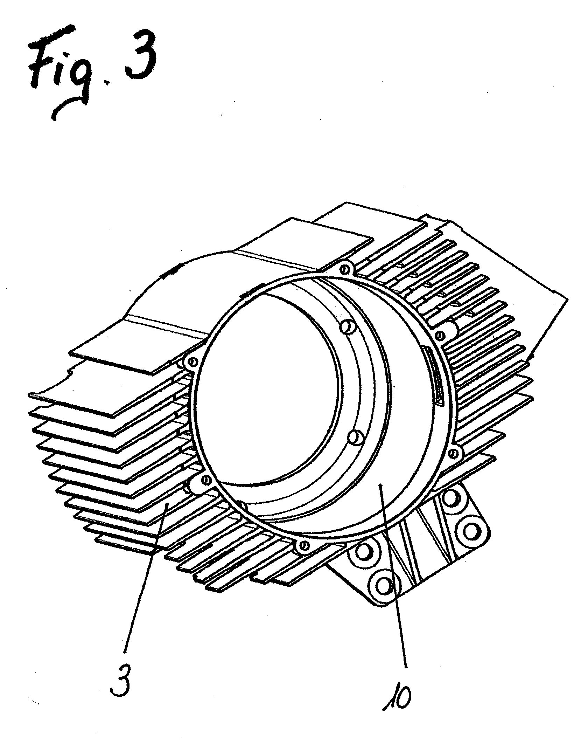

Gemäß der Fig. 3 ist ein aus Aluminium gefertigtes Gehäuse 10 für die Maschine 1 aufgezeigt, mit dem diese auftretenden schwierigen Probleme bewältigt und auch beherrscht werden können. Das Gehäuse 10 weist außen, diagonal gegenüberliegende, überlange Kühlrippen 3 auf. Die überlangen Kühlrippen 3 schaffen, trotz Kapselung der Maschine 1, durch ihre Oberfläche die notwendige Kühlung. Dies ist auf die Verwendung von Aluminium zurückzuführen, da Aluminium eine um den Faktor 10 bessere Wärmeleitfähigkeit als Stahlguss aufweist. Durch diese exzellente Wärmeleitfähigkeit werden die überlangen Kühlrippen 3 wärmetechnisch wirksam.

Bei eingebauter Maschine 1 sind die Kühlrippen 3 senkrecht angeordnet. Durch diese Art der Konstruktion der Kühlrippen 3 wird eine sehr große Oberfläche für die Wärmeabfuhr durch Konvektion geschaffen. Durch den Verlauf der Kühlrippen 3 parallel zueinander, die mindestens auf einer Seite der Maschine 1 angeordnet sind, wird eine maximale Kühloberfläche bei geringstem Raumbedarf erreicht. Ferner werden - bei Anordnung der Kühlrippen 3 auf beiden Seiten der Maschine 1 - durch die miteinander fluchtende, diagonal gegenüberliegende Anordnung der Kühlrippen 3 die vorgegebenen Einbauverhältnisse in einem Antriebsportal optimal ausgenützt.

Wie bereits oben ausgeführt, sind die Einbauverhältnisse im Antriebsportal meist vorgegeben. Durch die Anordnung und/oder Formgebung der Kühlrippen 3, die praktisch frei konstruiert bzw. gewählt werden kann, kann die Maschine den Einbau- und/oder Platzverhältnissen entsprechend angepasst werden und kann auch diesen Vorgaben Rechnung getragen werden.

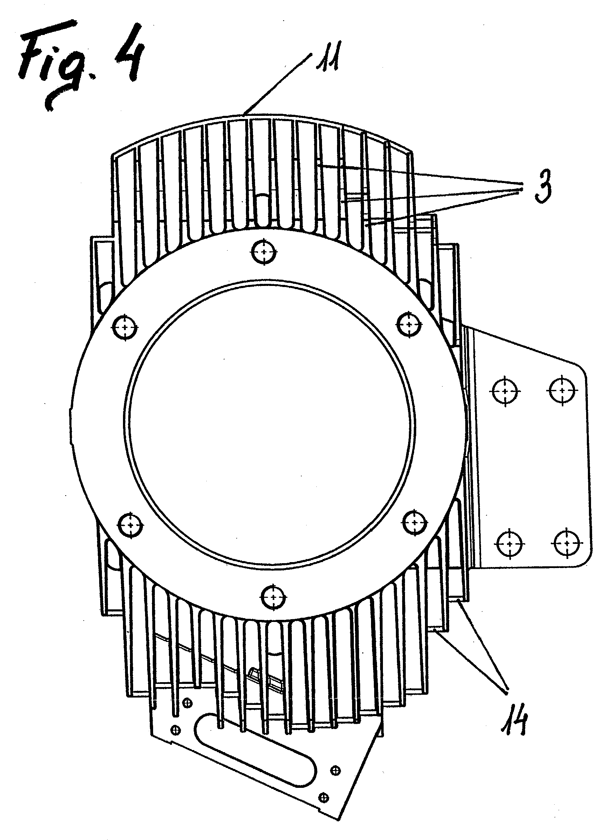

Entsprechend der Fig. 4 - die eine Ansicht von der Seite des Getriebes 2 zeigt -wird eine nochmalige Vergrößerung der für die Konvektion zu Verfügung stehenden Oberfläche aufgezeigt. Dabei sind mindestens ein Teil der Kühlrippen 3, beispielsweise einer Seite der Maschine 1, an ihren freien Enden über einen Mantel 11 verbunden. Der Mantel 11 kann sich nur über einen Teil der Oberfläche der Maschine 1 erstrecken. Im Extremfall kann dieser Mantel 11 auch ein Zylinder sein, der die Maschine 11 quasi umhüllt. Es können aber auch die Kühlrippen 3 im Bereich ihrer freien Enden mit Stege 14 verbunden werden. Ein derartiger Mantel 11 bzw. die Verbindung der Kühlrippenspitzen mit Stege 14 bringt einerseits eine drastische Reduzierung der Lärmabstrahlung und anderseits wird die aktive Kühlungsoberfläche noch weiter erhöht. Ein derartiger Mantel 11 kann an den Spitzen der Kühlrippen 3 mittels einer Schweißverbindung vorgesehen werden. Bei der Anordnung von Stegen 14 können diese im Bereich der Kühlrippenspitzen mit den Kühlrippen 3 verbunden werden.

Der Wirkungsgrad für die Wärmeabfuhr könnte auch noch dadurch verbessert werden, wenn bei senkrechter, eingebauter Maschine 1 im Bereich knapp über dem oberen Lagerschild bzw. den Kühlrippen, also der dieser Ansicht gegenüberliegenden Seite, Luftleitbleche od. dgl. vorgesehen werden. Durch eine intelligente Anordnung von Leitblechen o. dgl. kann eine Saugströmung über der Maschine 1 erreicht werden, wodurch die Wärmeabfuhr noch erhöht werden kann. Wie später noch detaillierter ausgeführt wird, ist die Auslegung einer Traktionsmaschine vom Fahrspiel abhängig. Durch die Fahrbewegung wird eine Luftströmung in dem Fahrzeug bewirkt, die für die Saugströmung ausgenützt werden kann.

Zur Berechnung und Auslegung der elektrischen Maschine 1, die auch die Berechnung der Oberfläche für die Kühlung mit umfasst, ist ein Datenverarbeitungsprogramm vorgesehen, das zur Ermittlung von Zustandsgrößen, insbesondere der Temperaturen und Wärmeströme, vorzugsweise für den stationären Endzustand und/oder für den dynamischen Fahrbetrieb, in der elektrischen Maschine dient. Dieses Datenverarbeitungsprogramm führt die Berechnungen über ein Wärmequellennetzwerk durch.

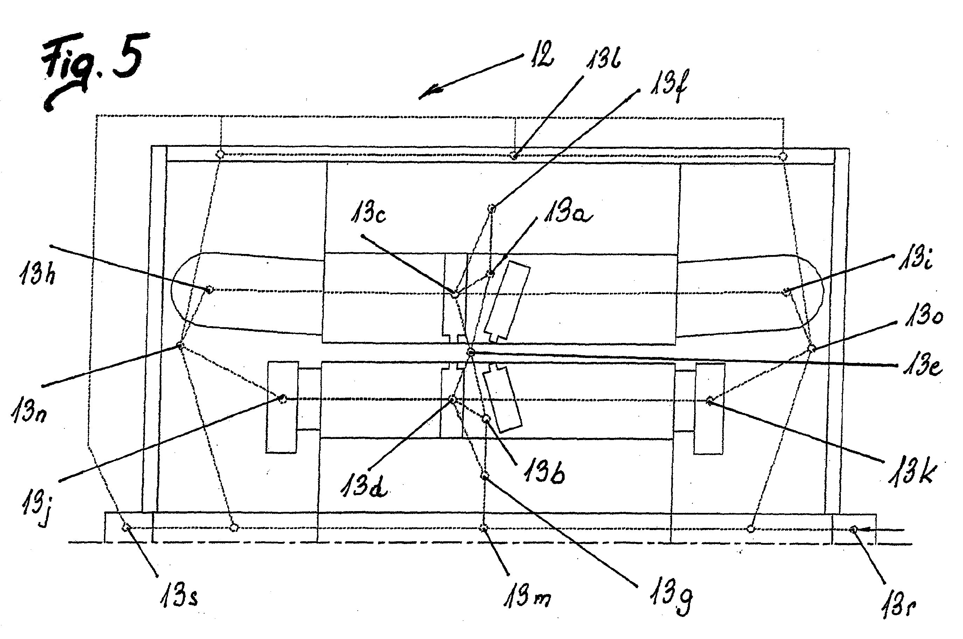

Gemäß der Fig. 5 ist eine Struktur eines Wärmequellennetzwerkes für eine elektrische Maschine 1 als Prinzipschaltbild dargestellt.

Mit einem Datenverarbeitungsprogramm wird entsprechend der geometrischen Definition der Maschine, wie vorzugsweise Abmessungen, Nutenform, Wicklungsart, Materialeigenschaften die Struktur des Wärmequellennetzes 12 erstellt. Weiters werden Knotenpunkte 13 für das Wärmequellennetz 12 festgelegt und zwischen den Knotenpunkten 13 die thermischen Übergangswiderstände definiert. Aus diesen Parametern werden die Temperaturen für den stationären Endzustand errechnet.

Es wird mindestens jeweils ein Knotenpunkt für die Zähne im Stator 13a und im Rotor 13b, für die Nuten jeweils im Stator 13c und im Rotor 13d, für den Luftspalt 13e, für das Statorjoch 13f, für das Rotorjoch 13g, für jede Seite des Wickelkopfes 13h, 13i und für den Kurzschlussring auf jeder Seite 13j, 13k festgelegt. Zur genaueren Auslegung der Maschine kann im Statorjoch 13f und den angrenzenden Konstruktionsteilen mindestens ein weiterer Knotenpunkt 131, vorzugsweise für das Gehäuse 10 bzw. die Kühlrippen 3, festgelegt werden. Zum gleichen Zweck kann im Rotorjoch 13g im Bereich der Welle 5 mindestens ein weiterer Knotenpunkt 13m festgelegt werden und der zwischen den Knotenpunkten 13b, 13m auftretende Übergangswiderstand wird in die Berechnung einbezogen.

Weiters können auch für die Innenluft der Maschine 1, nahe den Lagern, zusätzliche Knotenpunkte 13n, 13o bzw. einer für die Umgebungsluft festgelegt werden.

Da die Welle 5 der Maschine 1 sicher ein neuralgischer Maschinenteil ist, werden auch für das getriebeseitige Wellenende und das korrespondierende Wellenende, auf dem eine Bremsscheibe angeordnet sein kann, Knotenpunkte 13r, 13s festgelegt. Natürlich können noch weitere Knotenpunkte 13 für eine höhere Exaktheit der Berechnung festgelegt werden.

Weiters kann in der Berechnung der Verluste für die einzelnen Knotenpunkte 13 und/oder der thermischen Übergangswiderstände zwischen den einzelnen Knotenpunkten 13 das dynamische Verhalten der Maschine im Betrieb, insbesondere das Fahrspiel, berücksichtigt werden. Wie bereits erwähnt, ein weiterer Schritt sich den tatsächlichen Grenzwerten der Maschine zu nähern.

Die thermischen Übergangswiderstände werden unter Berücksichtigung des dynamischen Verhaltens der Maschine im Betrieb, insbesondere der Drehzahl und/oder der Geschwindigkeit des Fahrzeuges während des Fahrspiels, berechnet. Daraus ergibt sich, - ebenfalls erwähnt - dass die Maschine nicht auf die Temperaturen des stationären Endzustandes berechnet wird, sondern auf die tatsächlichen Werte im Betrieb.

Das Netzwerk der thermischen Übergangswiderstände wird durch die thermischen Kapazitäten der den Knoten entsprechenden Regionen der Maschine ergänzt.

Ferner kann in der Berechnung der Verluste für die einzelnen Knotenpunkte 13 und/oder der thermischen Übergangswiderstände zwischen den einzelnen Knotenpunkten 13 die Temperaturabhängigkeit der Materialien mittels eines Temperaturfaktors berücksichtigt werden.

Das dynamische Verhalten der Maschine im Betrieb, insbesondere während des Fahrspiels, wird in der Berechnung dynamisch simuliert und daraus werden Mittelwerte gerechnet.

Ebenso werden bei der Berechnung der thermischen Übergangswiderstände Korrekturfaktoren eingeführt, die vorzugsweise aus Erfahrungswerten gebildet werden.

An Hand eines Beispieles wird das Verfahren zur Auslegung einer Maschine näher erläutert:

Die Formeln für thermische Widerstände haben immer denselben Aufbau. Im Falle der Wärmeleitung lautet der thermische Widerstand

$$R_{th} = \frac{l}{\lambda \cdot A_Q}$$

mit

R$_{th}$    thermischer Widerstand
λ     spezifische Wärmeleitfähigkeit [W/m.K]
A$_Q$    Querschnitt, der für die Wärmeleitung zur Verfügung steht
l     Länge, über die Wärme transportiert wird.

Am Beispiel des thermischen Widerstandes R$_{th}$ zwischen Stator-Nut und dem Stator-Zahn sei die Anwendung dieser Formel demonstriert.

Es handelt sich um eine Serienschaltung aus einer Strecke im Wickelkupfer R$_{th,cu}$ einer Strecke durch Isolation R$_{th,Is}$ und einer Strecke durch Eisen (Dynamoblech) R$_{th,Fe}$:

$$R_{th} = R_{th,Cu} + R_{th,Is} + R_{th,Fe}$$

Der thermische Widerstand im Wickelkupfer beträgt

$$R_{th,\,Cu} = \frac{\dfrac{b_{Cu}}{2}}{\lambda_{Cu} \cdot 2 \cdot N_1 \cdot h_{Cu} \cdot l_{Fe}} \cdot k_{Korr}$$

mit

| | |
|---|---|
| $b_{Cu}$ | Breite des Wickelkupfers in der Nut |
| $\lambda_{Cu}$ | Wärmeleitfähigkeit von Kupfer |
| $N_1$ | Statornutenzahl (Es werden alle Nuten in einem thermischen Knoten zusammengefasst.) |
| $h_{Cu}$ | maßgebliche Höhe des Wickelkupfers in der Nut |
| $l_{Fe}$ | Länge des Blechpaketes |
| $k_{Korr}$ | Korrekturfaktor, der unter anderem berücksichtigt, dass die Verlustwärme im Wickelkupfer verteilt entsteht. |

Der thermische Widerstand der Isolation beträgt

$$R_{th,\,Is} = \frac{b_{Is}}{\lambda_{Is} \cdot 2 \cdot N_1 \cdot h_{Cu} \cdot l_{Fe}} \cdot k_{Korr}$$

mit

| | |
|---|---|
| $b_{Is}$ | einseitige Dicke der Isolation |
| $\lambda_{Is}$ | Wärmeleitfähigkeit des Isolationsmaterials |
| $k_{Korr}$ | Korrekturfaktor |

Der thermische Widerstand der Strecke im Eisen beträgt schließlich

$$R_{th,\,Fe} = \frac{\dfrac{b_{Zahn}}{2}}{\lambda_{Fe} \cdot 2 \cdot N_1 \cdot h_{Nut} \cdot l_{Fe}} \cdot k_{Korr}$$

mit

| | |
|---|---|
| $b_{Zahn}$ | Zahnbreite |
| $\lambda_{Fe}$ | Wärmeleitfähigkeit von Eisen (Dynamoblech) |
| $h_{Nut}$ | maßgebliche Nuthöhe |
| $k_{Korr}$ | Korrekturfaktor, der unter anderem die Schichtung aus einseitig lackierten Dynamoblechen berücksichtigt. |

Im Falle eines Wärmeüberganges $\Lambda$ auf ein Kühlmedium lautet die Formel

$$\Lambda = \alpha \cdot A_{\ddot{U}}$$

mit

| | |
|---|---|
| $\alpha$ | Wärmeübergangszahl [W/m$^2$.K] |
| $A_{\ddot{U}}$ | Fläche, die für den Wärmeübergang zur Verfü- |

gung steht.

Die Wärmeübergangszahl $\alpha$ ist stark von den Strömungsverhältnissen und der Oberflächengeometrie, wie eben den überlangen Kühlrippen, abhängig.

Für die Auslegung der Maschine werden zur Berücksichtigung des dynamischen Verhaltens der Maschine zu den thermischen realen Widerständen auch thermische Kapazitäten hinzugefügt, über welche die zeitliche Abhängigkeit der Temperaturverteilung in der Maschine berücksichtigt werden kann. Durch das Hinzufügen der Kapazitäten werden komplexe thermische Widerstände geschaffen, in denen auch die thermische Zeitkonstante verankert ist. Die thermischen Kapazitäten werden aufgrund der Geometriematerialien und Randbedingungen der elektrischen Maschine festgelegt.

Anhand eines fiktiven oder realen Fahrspieles werden Werte, wie Drehzahl der Maschine, Geschwindigkeit oder Beschleunigung des angetriebenen Fahrzeugs und Verluste in Abhängigkeit der Zeit ermittelt. Zu den Verlusten zählen die Eisenverluste, Kupferverluste im Stator und Rotor sowie mechanische Verluste und sogenannte Zusatzverluste, welche alle anderen nicht zuordenbare Verluste beinhalten. Die Parameter in Abhängigkeit der Zeit entsprechend dem Fahrspiel werden zur thermischen Berechnung der Maschine herangezogen. Anhand des Wärmequellennetzes werden Differenzialgleichungen aufgestellt und durch deren Lösung die Temperaturen oder Wärmeströme in den Knoten des Wärmequellennetzes, welche bestimmte Stellen an der Maschine entsprechen, in Abhängigkeit der Zeit berechnet. Durch Aneinanderreihen mehrerer Fahrspiele nähert sich die ermittelte Temperatur einem bestimmten Grenzwert, im sogenannten Zustand der Beharrung. Diese Grenzwerte werden für die Auslegung der Maschine herangezogen. Durch die Berücksichtigung der dynamischen Verhältnisse kommt man sehr nahe an die realen Bedingungen heran, wodurch die elektrische Maschine optimal ausgelegt werden kann.

Abschließend sei der Ordnung halber darauf hingewiesen, dass in der Zeichnung einzelne Bauteile und Baugruppen zum besseren Verständnis der Erfindung unproportional und maßstäblich verzerrt dargestellt sind.

## Patentansprüche

1. Gekapselte, elektrische Maschine, vorzugsweise senkrecht eingebaute Asynchron-Traktionsmaschine, mit einem Gehäuse (10), einem im Gehäuse (10) angeordneten Stator (4) und einer rotierenden Welle (5) mit einem darauf befestigten Rotor (6), wobei die Maschine gegebenenfalls für einen Zusammenbau mit einem Getriebe (2) vorgesehen ist, wobei die Lagerung getriebeseitig erfolgt, **dadurch gekennzeichnet, dass** die Abführung der Verlustwärme durch natürliche Konvektion bzw. Strahlung und gegebenenfalls durch eine vom Fahrtwind erzeugte Konvektion erfolgt, wobei das Gehäuse (10) aus Leichtmetall, vorzugsweise Aluminium, hergestellt ist und das Gehäuse (10) außen, diagonal gegenüberliegende, Kühlrippen (3) aufweist.

2.  Elektrische Maschine nach Anspruch 1, **dadurch gekennzeichnet, dass** die Kühlrippen (3) eine Länge aufweisen, welche ein Vielfaches der Dicke der Kühlrippen (3) und der Abstände der Kühlrippen (3) zueinander beträgt.

3.  Elektrische Maschine nach Anspruch 1 oder 2, **dadurch gekennzeichnet, dass** bei eingebauter Maschine (1) die Kühlrippen (3) senkrecht angeordnet sind.

4.  Elektrische Maschine nach einem der Ansprüche 1 bis 3, **dadurch gekennzeichnet, dass** die auf einer Seite der Maschine (1) angeordneten Kühlrippen (3) parallel zueinander verlaufen.

5.  Elektrische Maschine nach mindestens einem der Ansprüche 1 bis 4, **dadurch gekennzeichnet, dass** die diagonal gegenüberliegenden Kühlrippen (3) miteinander fluchten.

6.  Elektrische Maschine nach mindestens einem der Ansprüche 1 bis 5, **dadurch gekennzeichnet, dass** die Anordnung und/oder Formgebung der Kühlrippen (3) entsprechend den Einbau- und/oder Platzverhältnissen erfolgt.

7.  Elektrische Maschine nach mindestens einem der Ansprüche 1 bis 6, **dadurch gekennzeichnet, dass** mindestens ein Teil der Kühlrippen (3), insbesondere einer Seite der Maschine (1), im Bereich ihrer freien Enden über einen Mantel (11) bzw. Stege (14) verbunden sind.

8.  Elektrische Maschine nach mindestens einem der Ansprüche 1 bis 7, **dadurch gekennzeichnet, dass** bei senkrechter, eingebauter Maschine (1) im Bereich knapp über dem oberen Lagerschild bzw. den Kühlrippen (3) Luftleitbleche od. dgl. vorgesehen sind.

9.  Elektrische Maschine nach mindestens einem der Ansprüche 1 bis 8, **dadurch gekennzeichnet, dass** zur Berechnung und Auslegung der elektrischen Maschine (1), insbesondere zur Dimensionierung der Kühlrippen (3), ein Datenverarbeitungsprogramm vorgesehen ist, das zur Ermittlung von Zustandsgrößen, insbesondere der Temperaturen und Wärmeströme, für den stationären Endzustand und/oder für den dynamischen Fahrbetrieb, in der elektrischen Maschine (1) dient, wobei dieses Datenverarbeitungsprogramm die Berechnungen über ein Wärmequellennetzwerk (12) durchführt.

10. Verfahren zur Auslegung einer elektrischen Maschine nach mindestens einem der Ansprüche 1 bis 9, wobei mit Hilfe eines Datenverarbeitungsprogramms entsprechend der geometrischen Definition der Maschine (1), wie Abmessungen, Nutenform, Wicklungsart und Materialeigenschaften ein Wärmequellennetz (12) erstellt wird, Knotenpunkte (13) für das Wärmequellennetz (13) festgelegt und zwischen den Knotenpunkten (13) die thermischen Übergangswiderstände definiert werden, und in den Knotenpunkten (13) die Temperaturen für den stationären Endzustand der Maschine (1) errechnet werden, **dadurch gekennzeichnet, dass** die Temperaturen in den Knotenpunkten (13) für den dynamischen Zustand der Maschine (1) errechnet werden, indem in die Berechnung der Verluste für die einzelnen Knotenpunkte (13) und/oder der thermischen Übergangswiderstände zwischen den einzelnen Knotenpunkten (13) das dynamische Verhalten der Maschine (1) im Betrieb, insbesondere das Fahrspiel, berücksichtigt wird, wobei die thermischen Übergangswiderstände zwischen den einzelnen Knotenpunkten (13) durch die thermischen Kapazitäten der entsprechenden Regionen der Maschine (1) ergänzt werden.

11. Verfahren nach Anspruch 10, **dadurch gekennzeichnet, dass** mindestens jeweils ein Knotenpunkt für die Zähne im Stator (13a) und im Rotor (13b), für die Nuten jeweils im Stator (13c) und im Rotor (13d), für den Luftspalt (13e), für das Statorjoch (13f), für das Rotorjoch (13g), für jede Seite des Wickelkopfes (13h, 13i) und für den Kurzschlussring auf jeder Seite (13j, 13k) festgelegt wird.

12. Verfahren nach Anspruch 11, **dadurch gekennzeichnet, dass** im Statorjoch (13f) und den angrenzenden Konstruktionsteilen, wie beispielsweise dem Gehäuse (10) mit den Kühlrippen (3), mindestens ein weiterer Knotenpunkt (13l) festgelegt wird und der zwischen den Knotenpunkten (13f, 13l) auftretende Übergangswiderstand berechnet wird.

13. Verfahren nach Anspruch 12, **dadurch gekennzeichnet, dass** im Rotorjoch (13g) und den angrenzenden Konstruktionsteilen, wie beispielsweise der Welle (5), mindestens ein weiterer Knotenpunkt (13m) festgelegt wird und der zwischen den Knotenpunkten (13g, 13m) auftretende Übergangswiderstand berechnet wird.

14. Verfahren nach mindestens einem der Ansprüche 10 bis 13, **dadurch gekennzeichnet, dass** bei der Berechnung der Verluste für die Knotenpunkte (13) und/oder der thermischen Übergangswiderstände zwischen den Knotenpunkten (13) die Temperaturabhängigkeit der Materialien mittels eines Temperaturfaktors berücksichtigt wird.

15. Verfahren nach mindestens einem der Ansprüche 10 bis 14, **dadurch gekennzeichnet, dass** aus den errechneten Werten der Temperaturen für den dynamischen Zustand der Maschine (1), insbesondere während des Fahrspiels, Mittelwerte berechnet werden.

16. Verfahren nach mindestens einem der Ansprüche 10 bis 15, **dadurch gekennzeichnet, dass** bei der Berechnung der thermischen Übergangswiderstände zwischen den Knotenpunkten (13) Korrekturfaktoren eingeführt werden, die vorzugsweise aus Erfahrungswerten gebildet werden.

Fig. 1

Fig.2

Fig. 3

3

10

*Fig. 4*

*Fig.5*

12  13ℓ  13f  13c  13a  13i  13o  13e  13h  13n  13j  13s  13d  13b  13k  13m  13g  13r

EP 1 523 085 A2